# EUROPÄISCHE PATENTSCHRIFT

(11) **EP 3 291 210 B1**
(45) Veröffentlichungstag und Bekanntmachung des Hinweises auf die Patenterteilung: **20.01.2021**
(21) Anmeldenummer: 17187955.4
(22) Anmeldetag: 25.08.2017
(51) Int. Cl.: G09F 3/00, G09F 3/03, B32B 15/04

(54) **SICHERHEITSETIKETT MIT METALLSCHICHT**
SECURITY LABEL WITH METAL LAYER
ÉTIQUETTE DE SÉCURITÉ POURVUE D'UNE COUCHE MÉTALLIQUE

(30) Priorität: 06.09.2016 DE 102016216878
(43) Veröffentlichungstag der Anmeldung: 07.03.2018
(73) Patentinhaber: tesa scribos GmbH, 69126 Heidelberg (DE)
(72) Erfinder: STAHL, Simon, 64331 Weiterstadt (DE); KRESSE, Tobias, 76135 Karlsruhe (DE); TERHALLE, Bernd, 69469 Weinheim (DE)
(74) Vertreter: tesa SE

(56) Entgegenhaltungen:
- EP-A1- 1 150 270
- AT-A2- 509 904
- US-A1- 2011 291 399

## Beschreibung

Die Erfindung betrifft ein Sicherheitsetikett mit einer Trägerfolie und einer entlang der Trägerfolie aufgebrachten ersten Farbschicht und einer entlang der Trägerfolie aufgebrachten zweiten Farbschicht und einer ersten Funktionsschicht, die entlang der Trägerfolie partiell auf die erste Farbschicht aufgebracht ist, und einer Metallschicht. Die Erfindung betrifft auch ein Verfahren zur Herstellung einer Sequenz von Sicherheitsetiketten, indem eine erste Farbschicht entlang einer Trägerfolie aufgebracht wird, eine zweite Farbschicht entlang der Trägerfolie aufgebracht wird, eine erste Funktionsschicht entlang der Trägerfolie partiell auf die erste Farbschicht aufgebracht wird.

Sicherheitsetiketten mit einem Erstöffnungsnachweis sind im Stand der Technik bekannt.

Aus DE 100 30 596 A1 ist ein mehrschichtiges Klebeband mit einem Träger auf Basis einer gereckten Thermoplastfolie bekannt, dessen obere Seite gegebenenfalls mit einer Trennlackierung beschichtet ist und auf dessen unterer Seite eine Schichtfolge aufgebracht ist, und zwar: eine nicht vollflächig aufgetragene Primerschicht, eine vollflächig über die aufgetragene Primerschicht und die freie Thermoplastfolienoberfläche aufgetragene erste Trennschicht, mindestens eine vollflächig auf die erste Trennschicht aufgetragene zweite Trennschicht und eine vollflächig auf die zweite Trennschicht aufgetragene Haftklebmasse.

Des Weiteren ist aus WO 2012/019721 A1 ein Sicherheitsetikett mit Manipulationsnachweis bekannt. Dabei ist eine Schichtfolge vorgesehen, die eine vollflächige semi-transparente Metallschicht umfasst. Von der Metallschicht wird das Licht an der Grenzfläche zur nächsten Schicht teilweise reflektiert und der refraktive Effekt der optisch aktiven Struktur für den Betrachter sichtbar.

In US 4,184,701 ist ebenfalls ein Sicherheitsetikett beschrieben. Beim Öffnen des Sicherheitsetikettes wird eine gefärbte Klebstoffschicht aufgebrochen, die zum Teil am auf der Verpackung klebenden Rest und zum Teil am abgezogenen Teil verhaften bleibt.

In DE 10 2012 203 350 A1 ist ein Sicherheitsetikett mit einer metallisierten Schicht offenbart, wobei in die metallisierte Schicht wenigstens ein optisch variables Element eingebracht ist und das wenigstens eine optisch variable Element eine individuelle laserlithografische Struktur mit einer Auflösung von unter 20 µm aufweist.

In DE 10 2005 061 126 A1 ist ein Etikett mit erhöhter Fälschungssicherheit beschrieben mit einem Trägerlaminat, das sich aus zumindest zwei Trägerschichten zusammensetzt, wobei auf einer der offenen Seiten der Trägerschichten eine Klebschicht aufgebracht ist und wobei zwischen den Trägerschichten des Trägerlaminates eine nicht vollflächig aufgetragene Trennschicht vorhanden ist, die die Interlaminathaftung zwischen den beiden Trägerschichten herabsetzt, indem die Haftkräfte der Trennschicht zu zumindest einer Trägerschicht geringer sind als die Haftkräfte der anderen Trägerschicht zur ersten Trägerschicht.

In DE 101 40 491 A1 ist ein mehrschichtiges Etikett mit einem Träger auf Basis einer gereckten Thermoplastfolie offenbart, dessen obere Seite mit einer Druckfarbe bedruckt ist und auf dessen untere Seite folgende Schichten aufgebracht sind: eine nicht vollflächig aufgetragene Primerschicht, eine vollflächig über die aufgetragene Primerschicht aufgetragene Trennschicht und eine vollflächig auf die Trennschicht aufgetragene Haftklebemasse.

DE 10 2012 218 033 A1 offenbart ein Versiegelungsetikett mit einer Trägerschicht, einer nicht vollflächig auf die Trägerschicht aufgebrachten ersten haftungssteuernden Schicht, einer auf die Trägerschicht und die erste haftungssteuernde Schicht vollflächig aufgebrachten ersten Farbschicht, einer nicht vollflächig auf die erste Farbschicht aufgebrachten zweiten haftungssteuernden Schicht, einer vollflächig auf die zweite haftungssteuernde Schicht und erste Farbschicht aufgebrachten zweiten Farbschicht und einer vollflächig auf die zweite Farbschicht aufgebrachten Klebschicht.

Die AT 509 904 A2 offenbart ein Sicherheitsetikett mit Manipulationsnachweis, aufweisend ein zumindest teilweise transparentes flexibles Trägersubstrat auf Basis einer flexiblen Kunststofffolie, dadurch gekennzeichnet, dass auf eine Oberfläche des Trägersubstrats folgende Schichten aufgebracht sind: a) eine geprägte Lackschicht b) eine semitransparente oder reflektierende Metallschicht bzw. eine transparente Schicht mit hohem Brechungsindex c) eine partielle Trennlackschicht in Form von Buchstaben, Zeichen, Symbolen, Linien, Guillochen, Zahlen oder Schriftzügen, d) eine vollflächige Lackschicht e) eine RFID-Antenne f) ein RFID-Chip g) eine Selbstklebebeschichtung, wobei in den nicht mit der Trennlackschicht c) beschichteten Bereichen die Schicht b) schlechter auf der Schicht a) haftet als alle anderen Schichten untereinander und die Haftung der Schicht b) zur Schicht a) geringer ist als die Klebkraft der Selbstklebebeschichtung am Objekt und in den mit der Trennlackschicht c) beschichteten Bereichen die Schicht c) schlechter auf der Schicht b) oder d) haftet als alle anderen Schichten untereinander und die Haftung der Schicht c) zur Schicht b) oder d) geringer ist als die Klebkraft der Selbstklebebeschichtung am Objekt.

Die oben genannten Sicherheitsetiketten dienen als Erstöffnungsnachweis, der darauf beruht, dass vor dem Öffnen ein bestimmter optischer Eindruck des Sicherheitsetikettes vorhanden ist, nach dem Öffnen und dem Wiederverschließen jedoch ein anderer optischer Eindruck entsteht, da die intrinsische Struktur des Sicherheitsetikettes durch das Öffnen unwiderruflich zerstört wird und durch Lufteinschlüsse und Ähnliches das optische Verhalten des Sicherheitsetikettes unwiderruflich verändert wird. In einigen Anwendungen besteht das Bedürfnis, die Fälschungssicherheit des Sicherheitsetikettes noch weiter zu steigern.

Es ist daher Aufgabe der vorliegenden Erfindung, ein Sicherheitsetikett der eingangs genannten Art weiter zu verbessern. Es ist auch Aufgabe der Erfindung, ein Verfahren zur Herstellung eines Sicherheitsetikettes zur Verfügung zu stellen.

Die Aufgabe wird durch ein oben genanntes Sicherheitsetikett mit den Merkmalen des Anspruchs 1 gelöst.

Die Erfindung zeichnet sich dadurch aus, dass eine Metallschicht entlang einer Trägerfolie partiell aufgetragen ist und registergenau zu einer ersten Funktionsschicht angeordnet ist. Die Metallschicht kann eine Aluminiumschicht, eine aluminiumhaltige Schicht oder eine ein anderes Metall aufweisende Schicht sein. Die Metallschicht ist zusätzlich zum Erstöffnungsnachweis vorgesehen.

Da zusätzlich zum Erstöffnungsnachweis eine Metallschicht vorhanden ist, können in die Metallschicht optische Sicherheitsmerkmale wie Hologramme, diffraktive Hologramme oder andere hochauflösende laserlithografische Strukturen eingebracht werden. Dadurch wird zum einen der Sicherheitseffekt des Sicherheitsetikettes erhöht, zum anderen erhält das Sicherheitsetikett durch den metallischen Glanz eine höhere optische Wertigkeit. Insgesamt wird die technologische Hürde zum Nachstellen des beschriebenen Sicherheitsetikettes durch den komplexeren Produktionsprozess mit einer zusätzlichen registergenau aufzubringenden Metallschicht deutlich erhöht.

Das Sicherheitsetikett ist vorzugsweise ein aus einer Mehrzahl an Sicherheitsetiketten ausgewähltes oder herausgetrenntes Sicherheitsetikett. Die Mehrzahl an Sicherheitsetiketten kann auf einer durchgehenden, zusammenhängenden Trägerfolie in einer Sequenz in einer Reihe hintereinander oder in einem zweidimensionalen Raster angeordnet sein. Unter Mehrzahl sind hier zwei, drei oder jeder höhere Anzahl zu verstehen. Die Metallschicht und die erste Funktionsschicht jedes einzelnen Sicherheitsetikettes sind über die Mehrzahl an Sicherheitsetiketten registergenau angeordnet.

Die Metallschicht mit ihren eingebrachten optischen Elementen ist eine einfach zu verifizierende, technisch jedoch nur schwer nachzustellende Erweiterung des herkömmlichen Sicherheitsetikettes mit Tamper Evidence Effekt.

Die Metallschicht kann, muss aber nicht direkt auf die Trägerfolie aufgebracht sein, sie kann auch durch eine oder mehrere Schichten beabstandet von der Trägerfolie entlang der Trägerfolie aufgetragen sein.

Die Trägerfolie ist vorzugsweise eine Thermoplastfolie, insbesondere auf Basis von Polyethylenterephthalat PET oder Polypropylen PP mit einer Dicke von vorzugsweise 10 bis 100 Mikrometern, besonders bevorzugt 30 - 60 Mikrometern.

Die Trägerfolie weist eine Oberseite und eine Unterseite auf, wobei von der Unterseite ein Schichtaufbau für den Erstöffnungsnachweis (Tamper Evidence Effekt) vorgesehen ist. Der Erstöffnungsnachweis ist grundsätzlich im Stand der Technik bekannt, jedoch nicht im Zusammenhang mit einer Metallschicht, deren Form durch die Struktur des Erstöffnungsnachweises bestimmt wird. Die Metallschicht ist zunächst partiell entlang der Trägerfolie aufgebracht, d. h. sie überdeckt die Trägerfolie nicht vollflächig, sondern es sind Bereiche entlang der Trägerfolie vorhanden, die nicht mit einer Metallschicht abgedeckt sind.

Darüber hinaus ist die Metallschicht registergenau zur ersten Funktionsschicht angeordnet, d. h. die Metallschicht ist bei einer Herstellung mehrerer Sicherheitsetiketten in jedem Sicherheitsetikett immer in derselben relativen Anordnung zur ersten Funktionsschicht ausgerichtet.

Die Metallschicht ist bei einer senkrechten Projektion auf die Trägerfolie nur in der komplementären Fläche der ersten Funktionsschicht angeordnet. Vorzugsweise schließen Ränder der Metallschicht mit Rändern der ersten Funktionsschicht ab, besonders bevorzugt schließen alle Ränder der ersten Metallschicht mit Rändern der ersten Funktionsschicht exakt ab.

Die erste Funktionsschicht ist eine adhäsionssteuernde Schicht. Die erste Funktionsschicht ist günstigerweise unmittelbar entlang der Trägerschicht auf die Unterseite der Trägerschicht aufgebracht, während eine erste Farbschicht vollflächig über die erste Funktionsschicht und auf die freien Bereiche der Unterseite der Trägerfolie aufgebracht ist. Entlang der ersten Farbschicht ist günstigerweise die zweite Farbschicht vorgesehen, die vollflächig entlang der ersten Farbschicht aufgebracht ist. Es kann allerdings vorgesehen sein, dass zwischen der ersten und zweiten Farbschicht zumindest partiell eine zweite Funktionsschicht vorgesehen ist. Erste und zweite Farbschicht müssen also nicht entlang ihrer gesamten Ausdehnung unmittelbar aufeinander angeordnet sein.

Die erste Funktionsschicht ist insofern adhäsionssteuernd, indem sie eine Trennkraft zwischen der Trägerfolie und der ersten Farbschicht herabsetzt, und zwar soweit herabsetzt, dass beim Öffnen des Sicherheitsetikettes eine Bruchlinie zwischen erster Funktionsschicht und erster Farbschicht auftritt, während die erste Farbschicht in den Bereichen, in denen keine erste Funktionsschicht vorhanden ist, an der Trägerfolie haften bleibt.

Die zweite Funktionsschicht ist ebenfalls adhäsionssteuernd. Vorzugsweise ist die zweite Funktionsschicht registergenau zur ersten Funktionsschicht angeordnet. Besonders bevorzugt füllt die zweite Funktionsschicht das Komplement der ersten Funktionsschicht vollständig aus; vorzugsweise überdecken erste und zweite Funktionsschicht eine Unterseite der Trägerfolie vollflächig und partitionieren die Unterseite der Trägerfolie.

In den Ausführungsformen, in denen nur eine Funktionsschicht vorgesehen ist, ist vorzugsweise eine Trennkraft zwischen der ersten Farbschicht und der zweiten Farbschicht größer als zwischen der ersten Funktionsschicht und der ersten Farbschicht. Die erste Funktionsschicht steuert als adhäsionssteuernde Schicht damit die Trennkräfte und ermöglicht ein Aufbrechen des Sicherheitsetikettes beim Öffnen zwischen der ersten Funktionsschicht und der ersten Farbschicht in Bereichen, in denen eine Funktionsschicht vorhanden ist, während in Bereichen, in denen keine Funktionsschicht vorhanden ist, das Sicherheitsetikett zwischen der ersten und zweiten Farbschicht aufbricht, wobei vorzugsweise die Trennkraft zwischen der ersten und zweiten Farbschicht geringer ist als zwischen der ersten Farbschicht und der Trägerfolie.

In den Ausführungsformen, in denen zwei Funktionsschichten vorgesehen sind, ist vorzugsweise eine Trennkraft zwischen erster Funktionsschicht und erster Farbschicht und zwischen erster Farbschicht und zweiter Funktionsschicht kleiner als zwischen erster und zweiter Farbschicht. Die Stärke der Trennkräfte wird durch Wahl der Zusammensetzung der ersten oder zweiten Funktionsschicht eingestellt. Durch die Einstellung der Trennkräfte durch die erste Funktionsschicht und die zweite Funktionsschicht bricht das Sicherheitsetikett nunmehr beim Erstöffnungsnachweis in Bereichen, in denen die erste Funktionsschicht vorhanden ist, zwischen der ersten Funktionsschicht und der ersten Farbschicht auf, während in Bereichen, in denen eine zweite Funktionsschicht vorhanden ist und damit keine erste Funktionsschicht, das Sicherheitsetikett zwischen der ersten Farbschicht und der zweiten Funktionsschicht aufbricht.

Die Verwendung zweier Funktionsschichten ermöglicht es, ein größeres Spektrum an Farbschichten zu verwenden, da das Sicherheitsetikett unabhängiger von der Trennkraft zwischen der ersten und zweiten Farbschicht wird.

Besonders bevorzugt ist die Metallschicht auf derselben Seite der Trägerfolie wie die erste Funktionsschicht aufgetragen. Die Metallschicht kann grundsätzlich auf beiden Seiten der Trägerfolie aufgebracht sein. Es ist daher auch möglich, dass sie auf der Unterseite der Trägerfolie aufgebracht ist, wodurch sie von außen gegen Manipulationen geschützt ist.

Die Metallschicht kann durch Drucken, Bedampfen, Kalt- oder Heißfolienprägung aufgebracht werden. Sie kann die Form von Logos, Ziffern, Schriftzügen oder Ähnlichem aufweisen, welche registergenau zu den verwendeten Funktionsschichten und somit auch zum Tamper Evidence Effekt angeordnet werden.

Demgegenüber werden die Funktions- und Farbschichten mittels Druck- oder Beschichtungsverfahren oder mittels Kaschierung aufgebracht. Die Funktionsschichten sind vorzugsweise transparent, so dass sie im geschlossenen Zustand des Etikettes nicht sichtbar sind; die Trägerfolie ist vorzugsweise ebenfalls transparent.

Die Aufgabe wird auch durch ein Verfahren zur Herstellung einer Mehrzahl von Sicherheitsetiketten gelöst. Das Verfahren eignet sich insbesondere zur Herstellung einer Mehrzahl der oben beschriebenen Sicherheitsetiketten. Es werden eine erste Farbschicht entlang einer Trägerfolie aufgebracht und eine zweite Farbschicht entlang der Trägerfolie aufgebracht. Eine erste Funktionsschicht wird entlang der Trägerfolie partiell auf die erste Farbschicht aufgebracht. Eine Metallschicht wird vorzugsweise durch Drucken, Bedampfen, Kalt- oder Heißfolienprägung entlang der Trägerfolie partiell aufgebracht und registergenau zur ersten Funktionsschicht aufgebracht. Die Farb- und Funktionsschichten werden in herkömmlichen Verfahren wie Druck- oder Beschichtungsverfahren oder mittels Kaschierung aufgebracht. Der registergenaue Auftrag ermöglicht eine gleichartige Ausgestaltung und gleiche Qualität der Sicherheitsetiketten auch bei einer fortlaufenden Herstellung der Sicherheitsetiketten, beispielsweise entlang einer bandförmigen Trägerfolie. Dort werden Sicherheitsetiketten in einer Sequenz hintereinander angeordnet hergestellt. Es ist auch denkbar, die Sicherheitsetiketten auf Bögen einer Trägerfolie in einem Raster herzustellen. Registergenaue Aufträge sind technisch schwierig durchzuführen und somit besonders fälschungssicher. Die Sequenz oder das Raster an Sicherheitsetiketten wird dann in einzelne Etiketten getrennt.

Vorzugsweise wird eine zweite Funktionsschicht registergenau zur ersten Funktionsschicht aufgebracht. Dadurch werden die oben beschriebenen Sicherheitsetiketten mit zwei Funktionsschichten hergestellt.

Günstigerweise wird die Metallschicht auf dieselbe Seite der Trägerfolie aufgebracht wie die erste Funktionsschicht. Die Metallschicht wird dabei im Komplement der ersten Funktionsschicht angeordnet. Es sind aber auch Aufbringungen auf der der ersten Funktionsschicht gegenüberliegenden Seite der Trägerfolie möglich.

Die Erfindung wird anhand von mehreren Ausführungsbeispielen in vierzehn Figuren beschrieben. Dabei zeigen:
- Fig. 1a: eine erste Ausführungsform eines erfindungsgemäßen Sicherheitsetikettes in einem geschlossenen Zustand,
- Fig. 1b: eine erste Ausführungsform des erfindungsgemäßen Sicherheitsetikettes in einem geöffneten Zustand,
- Fig. 2a: eine zweite Ausführungsform des erfindungsgemäßen Sicherheitsetikettes in einem geschlossenen Zustand,
- Fig. 2b: eine zweite Ausführungsform des erfindungsgemäßen Sicherheitsetikettes in einem geöffneten Zustand,
- Fig. 3a: eine dritte Ausführungsform des erfindungsgemäßen Sicherheitsetikettes in einem geschlossenen Zustand,
- Fig. 3b: eine dritte Ausführungsform des erfindungsgemäßen Sicherheitsetikettes in einem geöffneten Zustand,
- Fig. 4a: ein Beispiel einer registergenauen Anordnung einer Metallschicht,
- Fig. 4b: ein Beispiel einer registergenauen Anordnung einer ersten Funktionsschicht,
- Fig. 4c: ein Beispiel einer registergenauen Anordnung einer zweiten Funktionsschicht,
- Fig. 5a: das Sicherheitsetikett im geschlossenen Zustand und
- Fig. 5b: ein abgezogenes Teiletikett,
- Fig. 5c: ein auf dem Substrat verbleibender Rückstand,
- Fig. 5d: das Sicherheitsetikett im wiederverschlossenen Zustand,
- Fig. 6: ein weiteres Beispiel des erfindungsgemäßen geschlossenen Sicherheitsetikettes.

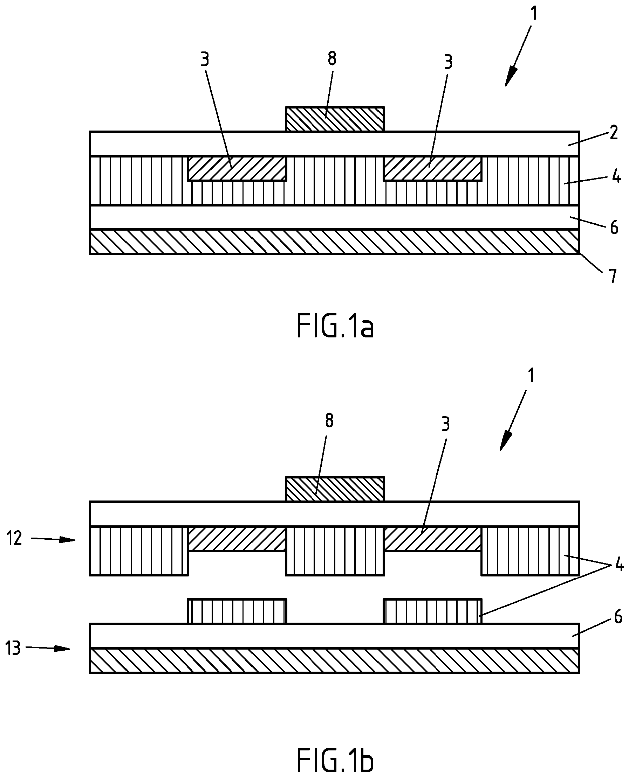

In den Fig. 1a, 1b ist eine erste Ausführungsform eines erfindungsgemäßen Sicherheitsetikettes 1 dargestellt. Als Trägerfolie 2 dient eine Thermoplastfolie, insbesondere auf Basis von Polyethylenterephthalat PET oder Polypropylen PP mit einer Dicke von vorzugsweise 10 bis 100 Mikrometern, besonders bevorzugt 30-60 Mikrometern. Von einer Unterseite der Trägerfolie 2 geht ein für den Erstöffnungsnachweis (Tamper Evidence Effekt) verantwortlicher Schichtaufbau ab. In dem Schichtaufbau des Erstöffnungsnachweises ist zunächst eine partiell auf die Unterseite der Trägerfolie 2 aufgetragene erste Funktionsschicht 3 vorgesehen, die adhäsionssteuernd wirkt. Unter partiell aufgetragen ist hier zu verstehen, dass die erste Funktionsschicht 3 die Unterseite der Trägerfolie 2 nicht vollflächig, d. h. nicht vollständig, abdeckt, sondern nur einige Bereiche der Unterseite der Trägerfolie 2 abdeckt und andere Bereiche unbedeckt bleiben. Die erste Funktionsschicht 3 wiederum ist vollflächig auf der trägerfolienabgewandten Seite mit einer ersten Farbschicht 4 abgedeckt. Die erste Farbschicht 4 ist vollflächig auf die erste Funktionsschicht 3 und die Unterseite der Trägerfolie 2 aufgetragen.

Auf die erste Farbschicht 4 ist eine zweite Farbschicht 6 ebenfalls vollflächig aufgetragen. Auf die zweite Farbschicht 6 ist auf der der ersten Farbschicht 4 abgewandten Seite eine Klebmasseschicht 7 aufgebracht, mit der das Sicherheitsetikett 1 auf einem Gegenstand aufgeklebt werden kann.

Auf eine der Unterseite gegenüberliegende Oberseite der Trägerfolie 2 ist eine Metallschicht 8 partiell aufgebracht.

Die Metallschicht 8 kann eine Aluminiumschicht oder Ähnliches sein oder eine Aluminium umfassende Schicht sein. Unter der Metallschicht 8 sind vollständig aus Metall bestehende Schichten aber auch metallhaltige Schichten zu verstehen.

Die Metallschicht 8 kann auf die Trägerfolie durch Drucken, Bedampfen, mit Kalt- oder Heißfolienprägung aufgebracht werden. Die Metallschicht 8 kann partiell aufgebracht werden, d. h. sie überdeckt die Trägerfolie nicht vollflächig; der partielle Auftrag kann in Form von Logos, Ziffern, Schriftzügen oder Ähnlichem erfolgen. Wesentlich ist jedoch, dass der Auftrag registergenau zur ersten Funktionsschicht 3 erfolgt.

Die Funktions- und Farbschichten 3, 4, 6, 9 werden mittels Druck- oder Beschichtungsverfahren oder mittels Kaschierung aufgebracht. Die Funktionsschichten, sowohl die erste Funktionsschicht 3 als auch die in weiteren Ausführungsbeispielen auftauchende zweite Funktionsschicht 9, sind vorzugsweise transparent, so dass sie insbesondere im geschlossenen Zustand des Sicherheitsetikettes 1 nicht sichtbar sind.

Unter registergenau wird hier verstanden, dass die Metallschicht 8 im Vergleich mehrerer Sicherheitsetiketten 1 immer dieselbe relative Anordnung zur ersten Funktionsschicht 3 aufweist. In der vorliegenden Ausführungsform ist die Metallschicht 8 in einer senkrechten Projektion auf die Trägerfolie 2 exakt in der komplementären Fläche der von der ersten Funktionsschicht 3 überdeckten Fläche angeordnet. Sie kann auch in Teilen der komplementären Fläche angeordnet sein.

Die Trägerfolie 2 ist wie die Funktionsschichten 3, 9 ebenfalls transparent ausgebildet. In Fig. 1b ist der geöffnete Zustand des Sicherheitsetikettes 1 dargestellt.

Bei dem Sicherheitsetikett 1 ist die Trennkraft der adhäsionssteuernden Funktionsschicht derart gewählt, dass eine Trennkraft zwischen erster Funktionsschicht 3 und der ersten Farbschicht 4 geringer ist als zwischen der ersten Farbschicht 4 und der zweiten Farbschicht 6, so dass eine Bruchlinie zwischen der ersten Funktionsschicht 3 und der ersten Farbschicht 4 beim Öffnen des Sicherheitsetiketts 1 verläuft; und darüber hinaus ist die Trennkraft zwischen der ersten Farbschicht 4 und der zweiten Farbschicht 6 geringer als zwischen der ersten Farbschicht 4 und der Trägerschicht 2, so dass die Bruchlinie zwischen der ersten und der zweiten Farbschicht 4, 6 verläuft.

Beim Betrachten des aufgeklebten, geschlossenen Sicherheitsetikettes 1 erkennt man die Metallschicht 8 sowie die vollflächige Farbe der ersten Farbschicht 4 durch die transparente Trägerfolie 2 und die transparente erste Funktionsschicht 3 hindurch. Im geöffneten Zustand des Sicherheitsetikettes 1 verbleibt auf der Verpackung ein Rückstand. Beim Betrachten des klebenbleibenden Rückstandes 11 erkennt der Betrachter die partiell aufgebrachte erste Farbschicht 4 und im komplementären Bereich der ersten Farbschicht 4 die nicht von der ersten Farbschicht 4 abgedeckte zweite Farbschicht 6. Auf einem abgezogenen Teiletikett 12 werden die Metallschicht 8 erkannt sowie zumindest die Teile der ersten Farbschicht 4, die nicht registergenau von der Metallschicht 8 überdeckt sind.

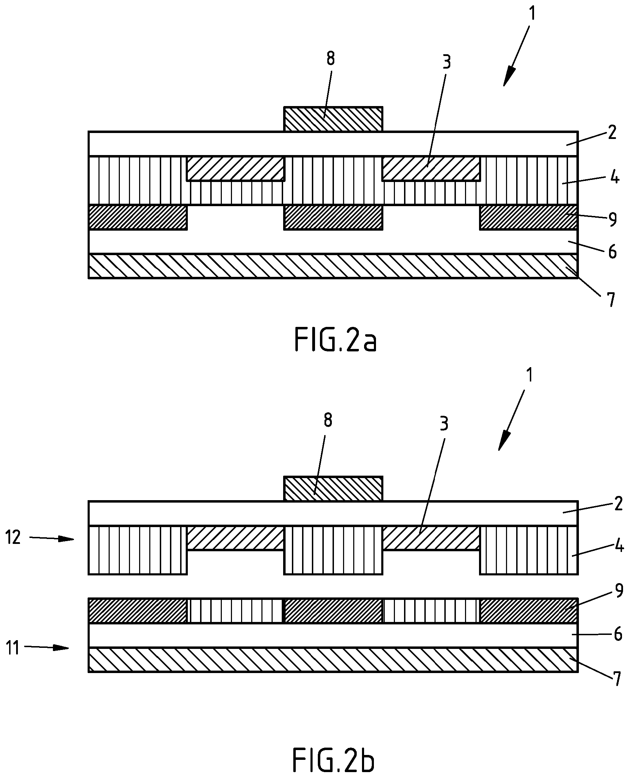

Die in den Fign. 2a, 2b dargestellte zweite Ausführungsform des erfindungsgemäßen Sicherheitsetikettes 1 umfasst zusätzlich zum Aufbau der ersten Ausführungsform des erfindungsgemäßen Sicherheitsetikettes 1 die zweite Funktionsschicht 9, die partiell auf die erste Farbschicht 4 aufgebracht ist, wobei die zweite Farbschicht 6 wiederum vollflächig über die zweite Funktionsschicht 9 und die erste Farbschicht 4 aufgebracht ist.

Die Klebmasseschicht 7 ist wiederum vollflächig auf die zweite Farbschicht 6 aufgebracht. Die Farbschichten 4, 6 sind grundsätzlich verschiedenfarbig ausgebildet, und die Farben sind vorzugsweise möglichst kontrastreich gewählt, beispielsweise Blau als erste Farbschicht 4 und Weiß als zweite Farbschicht 6. Das Aufbringen der Metallschicht 8 registergenau zur ersten Funktionsschicht 3 auf der Oberseite der Trägerfolie 2 ist technisch anspruchsvoll; das Problem besteht darin, in einem oder mehreren Produktionsschritten auf beiden Seiten der Trägerfolie 2 Schichten im Register aufzutragen, d. h. exakt komplementär zueinander. Des Weiteren ist das Aufbringen einer weiteren Metallschicht 8 problematisch, da es spezielles Equipment erforderlich macht. Beides erschwert den Nachbau des Sicherheitsetikettes 1.

Die zweite Ausführungsform gemäß Fign. 2a, 2b umfasst die zwei adhäsionssteuernden Funktionsschichten 3, 9. Es wird die erste Funktionsschicht 3 partiell auf die Trägerfolie 2 aufgebracht. Über die erste Funktionsschicht 3 wird vollflächig die erste Farbschicht 4 aufgebracht, und die zweite Funktionsschicht 9 wird ebenfalls partiell und komplementär zur ersten Funktionsschicht 3 auf die erste Farbschicht 4 aufgebracht. In einer Draufsicht überdecken die erste und zweite Funktionsschicht 3, 9 die Trägerfolie 2 vollflächig. Durch den komplementären Auftrag beider Funktionsschichten 3, 9 wird der Trenneffekt unabhängig von der Adhäsion der Farbschichten 4, 6 zueinander erzielt.
Die Trennkräfte sind derart gewählt, dass im geöffneten Zustand eine Bruchlinie zwischen der ersten Farbschicht 4 und der zweiten Funktionsschicht 9 sowie zwischen der ersten Funktionsschicht 3 und der ersten Farbschicht 4 erzeugt wird. Daher ist die Trennkraft zwischen erster Farbschicht 4 und zweiter Funktionsschicht 9 geringer als zwischen zweiter Funktionsschicht 9 und zweiter Farbschicht 6, und die Trennkraft zwischen erster Funktionsschicht 3 und erster Farbschicht 4 ist kleiner als die zwischen erster und zweiter Farbschicht 4, 6. Durch die Einstellung der adhäsionssteuernden Funktionsschichten 3, 9 mit den oben beschriebenen Trennkräften entsteht eine Bruchlinie zwischen dem verbleibenden Rückstand 11 und dem abgezogenen Teiletikett 12 gemäß Fig. 2b.

Der beschriebene Effekt lässt sich auch bei semi-transparenten Etiketten einsetzen; dabei ist die erste Farbschicht 4 semi-transparent, und die zweite Farbschicht 6 ist vollständig transparent ausgeführt. So wird bei der Applikation des Sicherheitsetikettes 1 auf einer Verpackung die Beschriftung, die unter dem Etikett liegt, nicht verdeckt. Das Auftragen der weiteren Schichten erfolgt analog zum Schichtaufbau in Fig. 2.

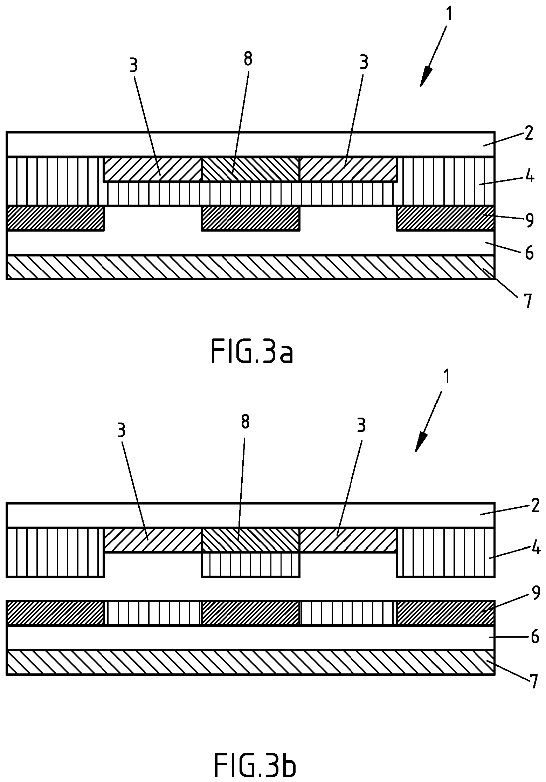

Die Fign. 3a, 3b zeigen eine dritte Ausführungsform des erfindungsgemäßen Sicherheitsetikettes 1. Dabei ist auf die Unterseite der Trägerfolie 2 die Metallschicht 8 partiell aufgebracht, und die erste Funktionsschicht 3 ist ebenfalls auf die Unterseite der Trägerfolie 2 aufgetragen. Die erste Farbschicht 4 ist vollflächig über die erste Funktionsschicht 3 und die Metallschicht 8 aufgebracht. Auf der der Trägerfolie abgewandten Seite der ersten Farbschicht 4, ist die zweite Funktionsschicht 9 registergenau zur ersten Funktionsschicht 3 aufgebracht, und über die zweite Funktionsschicht 9 und die erste Farbschicht 4 ist die zweite Farbschicht 6 vollflächig aufgebracht. Auf die zweite Farbschicht 6 ist trägerfolienabseitig die Klebmasseschicht 7 vollflächig aufgebracht. Die erste und die zweite Funktionsschicht 3, 9 erstrecken sich komplementär zueinander über die gesamte Ausdehnung der Trägerfolie 2.

Die Fig. 3b zeigt den geöffneten Zustand des Sicherheitsetikettes 1 der dritten Ausführungsform. Dabei sind die Trennkräfte wiederum so eingestellt, dass die Trennkraft zwischen erster Farbschicht 4 und zweiter Funktionsschicht 9 geringer ist als zwischen zweiter Funktionsschicht 9 und zweiter Farbschicht 6 und die Trennkraft zwischen erster Funktionsschicht 3 und erster Farbschicht 4 kleiner ist als zwischen erster und zweiter Farbschicht 4, 6. Die Trennkraft zwischen erster Farbschicht 4 und zweiter Funktionsschicht 9 ist geringer als zwischen Metallschicht 8 und erster Farbschicht 4 und auch geringer als zwischen zweiter Farbschicht 6 und zweiter Funktionsschicht 9.

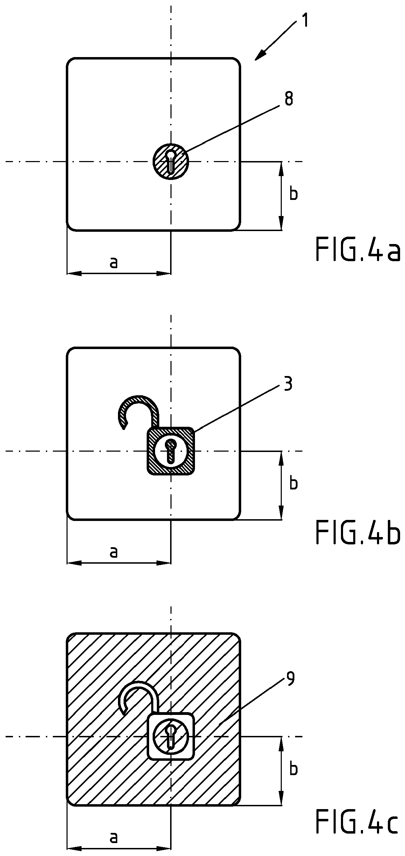

In den Fign. 4a, 4b und 4c ist eine Draufsicht eines erfindungsgemäßen Sicherheitsetikettes 1 dargestellt, wobei in der Fig. 4a die Form der Metallschicht 8 dargestellt ist. In Fig. 4b ist die erste Funktionsschicht 3 und in Fig. 4c die zweite Funktionsschicht 9 dargestellt. Deutlich zu erkennen ist, dass die zweite Funktionsschicht 9 genau dem Komplement der ersten Funktionsschicht 3 entspricht. Metallschicht 8, erste Funktionsschicht 3 und zweite Funktionsschicht 9 sind registergenau zueinander positioniert. Alle Schichten 8, 3, 9 weisen Abstände a, b des Mittelpunktes des Schlüsselloches vom linken seitlichen bzw. unteren Rand auf. Die Metallschicht 8 bildet den Schlüssellochbereich aus. Im geschlossenen Zustand stellt sich das Sicherheitsetikett 1 gemäß Fig. 4a dar, während nach dem Öffnen des Sicherheitsetikettes 1 ein geöffnetes Schloss erkennbar bleibt.

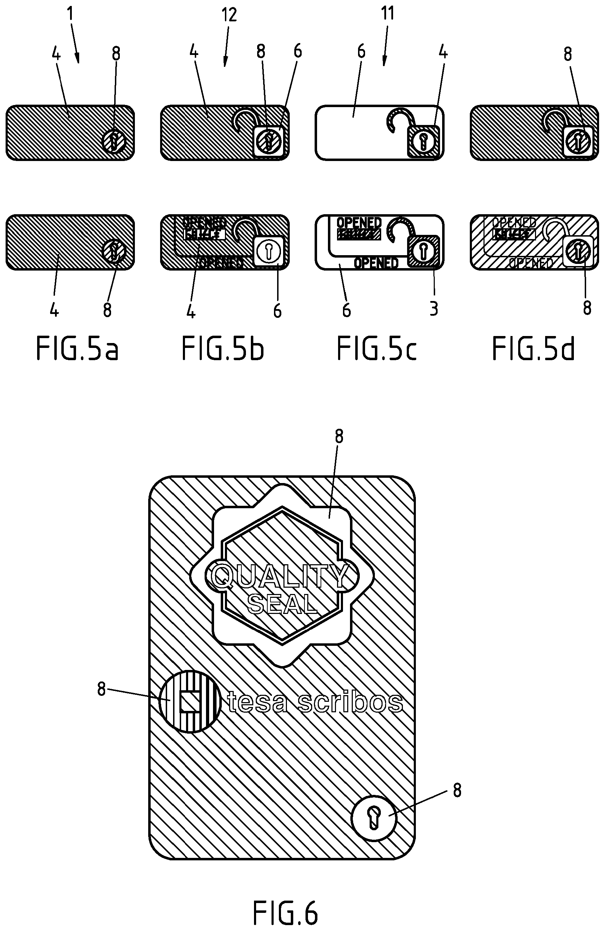

In der oberen Reihe in der Fig. 5 ist für dasselbe Schlüsselloch in Fig. 5a das Sicherheitsetikett 1 im geschlossenen Zustand, in Fig. 5b das abgezogene Teiletikett 12 nach dem Öffnen, in Fig. 5c der auf dem Substrat verbleibende Rückstand 11 und in Fig. 5d das Sicherheitsetikett im wiederverschlossenen Zustand dargestellt. Die Metallschicht 8 ist in den Fign. 5a, 5b und 5d als Schlüsselloch zu erkennen; die dunkelgraue Farbe stellt die erste Farbschicht 4 dar, während die zweite Farbschicht 6 weiß ist. Der Aufbau des Sicherheitsetikettes 1 entspricht dem in den Fign. 3a, 3b, d. h. im geschlossenen Zustand ist von außen nur die erste Farbe der ersten Farbschicht 4 zu erkennen, im aufgerissenen Zustand ist auf dem Teiletikett 12 von unten ebenfalls nur die erste Farbe der ersten Farbschicht 4 zu erkennen, ansonsten ist das Teiletikett 12 durchsichtig. Auf dem auf dem Substrat verbleibenden Rückstand 11 sind der komplementäre Teil der ersten Farbschicht 4 zu erkennen sowie Teile der zweiten Farbschicht 6. Beim Aufeinanderfügen der beiden Teile zum wiederverschlossenen Sicherheitsetikett 1 verbleiben immer Lufteinschlüsse zwischen dem abgezogenen Teiletikett 12 und dem auf dem Substrat verbleibenden Rückstand 11, die zu einem Brechungsverhalten führen derart, dass das geöffnete Schloss erkennbar bleibt, wie Fig. 5d zeigt.

In der unteren Reihe ist das gleiche Öffnungsverhalten dargestellt, nur mit einem anderen Muster. In der unteren Reihe der Fig. 5 sind reale Fotos von einem Sicherheitsetikett 1 dargestellt.

In der Fig. 6 ist im geschlossenen Zustand die Metallfolie 8 zu erkennen; diese kann über das geschlossene Schloss hinaus Firmenlogos, Schriftzeichen oder Ähnliches enthalten.

### Bezugszeichenliste

- 1: Sicherheitsetikett
- 2: Trägerfolie
- 3: erste Funktionsschicht
- 4: erste Farbschicht

- 6: zweite Farbschicht
- 7: Klebmasseschicht
- 8: Metallschicht
- 9: zweite Funktionsschicht

- 11: Rückstand
- 12: abgezogenes Teiletikett

- a: Abstand
- b: Abstand

## Patentansprüche

1. Sicherheitsetikett mit
einer Trägerfolie und
einer entlang der Trägerfolie (2) aufgebrachten ersten Farbschicht (4) und
einer entlang der Trägerfolie (2) aufgebrachten zweiten Farbschicht (6) und einer ersten adhäsionssteuernden Funktionsschicht (3), die entlang der Trägerfolie (2) partiell auf die erste Farbschicht (4) aufgebracht ist, und mit einer Metallschicht (8), wobei die Metallschicht (8) entlang der Trägerfolie (2) partiell aufgebracht ist, **dadurch gekennzeichnet, dass** die Metallschicht registergenau zur ersten adhäsionssteuernden Funktionsschicht (3) angeordnet ist, und bei einer senkrechten Projektion auf die Trägerfolie (2) die Metallschicht (8) nur in der komplementären Fläche der ersten adhäsionssteuernden Funktionsschicht (3) angeordnet ist.

2. Sicherheitsetikett nach Anspruch 1,
**dadurch gekennzeichnet, dass** die erste Farbschicht (4) und/oder zweite Farbschicht (6) vollflächig aufgebracht sind.

3. Sicherheitsetikett nach Anspruch 1 oder 2,
**dadurch gekennzeichnet, dass** die erste adhäsionssteuernde Funktionsschicht (3) zwischen der ersten Farbschicht (4) und der zweiten Farbschicht (6) angeordnet ist.

4. Sicherheitsetikett nach Anspruch 1 oder 2,
**dadurch gekennzeichnet, dass** die erste adhäsionssteuernde Funktionsschicht (3) zwischen der ersten Farbschicht (4) und der Trägerfolie (2) angeordnet ist.

5. Sicherheitsetikett nach einem der vorstehenden Ansprüche,
**dadurch gekennzeichnet, dass** die erste adhäsionssteuernde Funktionsschicht (3) registergenau zu einer zweiten adhäsionssteuernden Funktionsschicht (9) aufgebracht ist, wobei die zweite adhäsionssteuernden Funktionsschicht (9) das Komplement der ersten adhäsionssteuernden Funktionsschicht (3) vollständig ausfüllt.

6. Sicherheitsetikett nach einem der vorstehenden Ansprüche,
**dadurch gekennzeichnet, dass** die Metallschicht (8) auf einer der ersten adhäsionssteuernden Funktionsschicht (3) gegenüberliegenden Seite der Trägerfolie (2) aufgebracht ist.

7. Sicherheitsetikett nach einem der Ansprüche 1 bis 5,
**dadurch gekennzeichnet, dass** die Metallschicht (8) auf derselben Seite der Trägerfolie (2) wie die erste adhäsionssteuernde Funktionsschicht (3) aufgebracht ist.

8. Sicherheitsetikett nach einem der vorstehenden Ansprüche,
**dadurch gekennzeichnet, dass** eine Trennkraft zwischen der ersten Farbschicht (4) und der zweiten Farbschicht (6) größer ist als zwischen der ersten adhäsionssteuernden Funktionsschicht (3) und der ersten Farbschicht (4).

9. Sicherheitsetikett nach einem der Ansprüche 5 bis 8,
**dadurch gekennzeichnet, dass** eine Trennkraft zwischen erster adhäsionssteuernder Funktionsschicht (3) und erster Farbschicht (4) und zwischen erster Farbschicht (4) und zweiter adhäsionssteuernden Funktionsschicht (9) kleiner als zwischen erster und zweiter Farbschicht (4, 6) ist.

10. Sicherheitsetikett nach einem der Ansprüche 5 bis 9,
**dadurch gekennzeichnet, dass** die Trennkraft zwischen der Metallschicht (8) und erster Farbschicht (4) größer ist als zwischen erster Farbschicht (4) und zweiter adhäsionssteuernden Funktionsschicht (9).

11. Verfahren zur Herstellung einer Sequenz von Sicherheitsetiketten (1), indem
eine erste Farbschicht (4) entlang einer Trägerfolie (2) aufgebracht wird,
eine zweite Farbschicht (6) entlang der Trägerfolie (2) aufgebracht wird,
eine erste adhäsionssteuernde Funktionsschicht (3) entlang der Trägerfolie (2) partiell auf die erste Farbschicht (4) aufgebracht wird, wobei eine Metallschicht (8) entlang der Trägerfolie (2) partiell aufgebracht wird, **dadurch gekennzeichnet dass** die Metallschicht registergenau zur ersten adhäsionssteuernden Funktionsschicht (3) aufgebracht wird, und bei einer senkrechten Projektion auf die Trägerfolie (2) die Metallschicht (8) nur in der komplementären Fläche der ersten adhäsionssteuernden Funktionsschicht (3) angeordnet ist.

12. Verfahren nach Anspruch 11,
**dadurch gekennzeichnet, dass** eine zweite adhäsionssteuernde Funktionsschicht (9) registergenau zur ersten adhäsionssteuernden Funktionsschicht (3) aufgebracht wird, wobei die zweite adhäsionssteuernden Funktionsschicht (9) das Komplement der ersten adhäsionssteuernden Funktionsschicht (3) vollständig ausfüllt.

13. Verfahren nach Anspruch 11 oder 12,
**dadurch gekennzeichnet, dass** die Metallschicht (8) auf dieselbe Seite der Trägerfolie (2) aufgebracht wird wie die erste adhäsionssteuernde Funktionsschicht (3).

## Claims

1. Security label with
a carrier film and
a first colour layer (4) applied along the carrier film (2) and
a second colour layer (6) applied along the carrier film (2) and
a first adhesion-controlling functional layer (3) applied locally to the first colour layer (4) along the carrier film (2), and with
a metal layer (8), wherein the metal layer (8) has been applied locally along the carrier film (2), **characterized in that** the metal layer has been arranged in precise register with the first adhesion-controlling functional layer (3), and in a vertical projection onto the carrier film (2) the metal layer (8) is arranged only in the area that is complementary to the area of the first adhesion-controlling functional layer (3).

2. Security label according to Claim 1,
**characterized in that** the first colour layer (4) and/or second colour layer (6) have been applied over the entire surface.

3. Security label according to Claim 1 or 2,
**characterized in that** the first adhesion-controlling functional layer (3) has been arranged between the first colour layer (4) and the second colour layer (6) .

4. Security label according to Claim 1 or 2,
**characterized in that** the first adhesion-controlling functional layer (3) has been arranged between the first colour layer (4) and the carrier film (2).

5. Security label according to any of the preceding claims,
**characterized in that** the first adhesion-controlling functional layer (3) has been applied in precise register with a second adhesion-controlling functional layer (9), where the second adhesion-controlling functional layer (9) occupies the entire area that is complementary to the first adhesion-controlling functional layer (3).

6. Security label according to any of the preceding claims,
**characterized in that** the metal layer (8) has been applied on that side of the carrier film (2) that is opposite to the first adhesion-controlling functional layer (3).

7. Security label according to any of Claims 1 to 5,
**characterized in that** the metal layer (8) and the first adhesion-controlling functional layer (3) have been applied on the same side of the carrier film (2) .

8. Security label according to any of the preceding claims,
**characterized in that** a separation force between the first colour layer (4) and the second colour layer (6) is greater than between the first adhesion-controlling functional layer (3) and the first colour layer (4).

9. Security label according to any of Claims 5 to 8,
**characterized in that** a separation force between first adhesion-controlling functional layer (3) and first colour layer (4) and between first colour layer (4) and second adhesion-controlling functional layer (9) is smaller than between first and second colour layer (4, 6).

10. Security label according to any of Claims 5 to 9,
**characterized in that** the separation force between the metal layer (8) and first colour layer (4) is greater than between first colour layer (4) and second adhesion-controlling functional layer (9).

11. Process for the production of a sequence of security labels (1), by
applying a first colour layer (4) along a carrier film (2),
applying a second colour layer (6) along the carrier film (2),
applying a first adhesion-controlling functional layer (3) locally to the first colour layer (4) along the carrier film (2), where a metal layer (8) is applied locally along the carrier film (2), **characterized in that** the metal layer is applied in precise register with the first adhesion-controlling functional layer (3), and in a vertical projection onto the carrier film (2) the metal layer (8) is arranged only in the area that is complementary to the area of the first adhesion-controlling functional layer (3).

12. Process according to Claim 11,
**characterized in that** a second adhesion-controlling functional layer (9) is applied in precise register with the first adhesion-controlling functional layer (3), where the second adhesion-controlling functional layer (9) occupies the entire area that is complementary to the first adhesion-controlling functional layer (3).

13. Process according to Claim 11 or 12,
**characterized in that** the metal layer (8) and the first adhesion-controlling functional layer (3) are applied to the same side of the carrier film (2).

## Revendications

1. Étiquette de sécurité comprenant
un film support et
une première couche de couleur (4) appliquée le long du film support (2) et
une deuxième couche de couleur (6) appliquée le long du film support (2) et
une première couche fonctionnelle de commande d'adhérence (3) qui est partiellement appliquée le long du film support (2) sur la première couche de couleur (4), et
une couche métallique (8),
la couche métallique (8) étant partiellement appliquée le long du film support (2), **caractérisée en ce que** la couche métallique est disposée en étant calée précisément sur la première couche fonctionnelle de commande d'adhérence (3) et, dans le cas d'une projection perpendiculaire sur le film support (2), la couche métallique (8) étant disposée uniquement dans la surface complémentaire de la première couche fonctionnelle de commande d'adhérence (3).

2. Étiquette de sécurité selon la revendication 1,
**caractérisée en ce que** la première couche de couleur (4) et/ou la deuxième couche de couleur (6) sont appliquées sur toute la surface.

3. Étiquette de sécurité selon la revendication 1 ou 2,
**caractérisée en ce que** la première couche fonctionnelle de commande d'adhérence (3) est disposée entre la première couche de couleur (4) et la deuxième couche de couleur (6).

4. Étiquette de sécurité selon la revendication 1 ou 2,
**caractérisée en ce que** la première couche fonctionnelle de commande d'adhérence (3) est disposée entre la première couche de couleur (4) et le film support (2).

5. Étiquette de sécurité selon l'une des revendications précédentes,
**caractérisée en ce que** la première couche fonctionnelle de commande d'adhérence (3) est appliquée sur une deuxième couche fonctionnelle de commande d'adhérence (9) en étant calée précisément sur celle-ci, la deuxième couche fonctionnelle de commande d'adhérence (9) remplissant complètement le complément de la première couche fonctionnelle de commande d'adhérence (3) .

6. Étiquette de sécurité selon l'une des revendications précédentes, **caractérisée en ce que** la couche métallique (8) est appliquée sur un côté du film support (2) qui est opposé à la première couche fonctionnelle de commande d'adhérence (3).

7. Étiquette de sécurité selon l'une des revendications 1 à 5,
**caractérisée en ce que** la couche métallique (8) est appliquée sur le même côté du film support (2) que la première couche fonctionnelle de commande d'adhérence (3) .

8. Étiquette de sécurité selon l'une des revendications précédentes,
**caractérisée en ce qu'**une force de séparation est plus grande entre la première couche de couleur (4) et la deuxième couche de couleur (6) qu'entre la première couche fonctionnelle de commande d'adhérence (3) et la première couche de couleur (4).

9. Étiquette de sécurité selon l'une des revendications 5 à 8, **caractérisée en ce qu'**une force de séparation est plus faible entre la première couche fonctionnelle de commande d'adhérence (3) et la première couche de couleur (4) et entre la première couche de couleur (4) et la deuxième couche fonctionnelle de commande d'adhérence (9) qu'entre la première et la deuxième couche de couleur (4, 6).

10. Étiquette de sécurité selon l'une des revendications 5 à 9,
**caractérisée en ce que** la force de séparation est plus grande entre la couche métallique (8) et la première couche de couleur (4) qu'entre la première couche de couleur (4) et la deuxième couche fonctionnelle de commande d'adhérence (9).

11. Procédé de fabrication d'une séquence d'étiquettes de sécurité (1) par application d'une première couche de couleur (4) le long d'un film support (2), application d'une deuxième couche de couleur (6) le long du film support (2) et application d'une première couche fonctionnelle de commande d'adhérence (3) partiellement sur la première couche de couleur (4) le long du film support (2), une couche métallique (8) étant partiellement appliquée le long du film support (2), **caractérisée en ce que** la couche métallique est appliquée en étant calée précisément sur la première couche fonctionnelle de commande d'adhérence (3) et, en cas de projection perpendiculaire sur le film support (2), la couche métallique (8) est disposée uniquement dans la surface complémentaire de la première couche fonctionnelle de commande d'adhérence (3).

12. Procédé selon la revendication 11,
**caractérisée en ce qu'**une deuxième couche fonctionnelle de commande d'adhérence (9) est appliquée en étant calée précisément sur la première couche fonctionnelle de commande d'adhérence (3), la deuxième couche fonctionnelle de commande d'adhérence (9) remplissant complètement le complément de la première couche fonctionnelle de commande d'adhérence (3).

13. Procédé selon la revendication 11 ou 12,
**caractérisée en ce que** la couche métallique (8) est appliquée sur le même côté du film support (2) que la première couche fonctionnelle de commande d'adhérence (3) .
